# EUROPEAN PATENT APPLICATION

(11) **EP 4 475 156 A1**
(43) Date of publication of application: **11.12.2024**
(21) Application number: 23178305.1
(22) Date of filing: 08.06.2023
(51) Int. Cl.: H01G 11/06, H01M 4/583, H01M 10/054, H01G 11/34, H01G 11/28, H01G 11/38, H01G 11/86, H01M 4/96, H01M 12/08, H01G 11/04, H01M 10/36, H01M 4/62

(54) **ELECTRODE FOR A ZINC-ION BATTERY AND PROCESS FOR THE MANUFACTURE OF SUCH ELECTRODE**

(71) Applicant: HILABS GmbH, 71032 Böblingen (DE)
(72) Inventor: Haq, Manan, 70569 Stuttgart (DE)
(74) Representative: Meyer zu Bexten, Elmar

(57) **Abstract**

The invention pertains to the field of energy storage, specifically zinc-ion batteries, electrochemical pseudocapacitors, and hybrid supercapacitors. It addresses the technical problem of limited lifespan and capacity in traditional manganese oxide-based electrodes. The solution is a novel electrode composed of carbonaceous active material, preferably microporous, devoid of manganese oxide, nickel, lithium, cobalt, and rare-earth elements. The active material is ideally amorphous or pure carbon. The manufacturing process involves creating a carbonaceous paste, preferably of activated carbon, and applying it to a metallic mesh to form a coated current collector. The coated electrode is then treated to activate its three-dimensional properties and high capacity. The invention offers enhanced lifespan and satisfactory capacity, making it advantageous for industrial applications in energy storage systems.

## Description

### Technical Field

The invention relates to the products and process as per the prior art portion of the independent claims.

### Background Art

Despite the wide usage of lithium cells owing to their advanced development stage and energy density, they are posing challenges in terms of safety, environmental protection, and cost. Zinc-air battery technology has been proposed as a solution, which allows for the storage of solar and wind power generated in private households and thus contributes to the envisaged transition from carbon to sustainable energy sources.

For instance, the flow battery disclosed in PTL1 through PTL5 may serve as a cost-effective and scalable power storage solution for both stationary and mobile applications, leveraging air and low-cost zinc metal as storage media. Unlike conventional lithium-ion batteries, this technology does not involve the use of toxic materials in its production, thereby causing no harm to the environment during raw material extraction.

Its design allows the secondary cell to "breathe" oxygen from ambient air, which in turn induces a chemical reaction within the battery, generating electric power. Once its capacity is depleted, the liquid anode may be pumped out of the battery and "recharged" using renewable electricity. Valuable raw materials can easily be recovered after the battery's lifespan and reintroduced into the battery cycle.

A modular design as per PTL6 allows such cells to be assembled into different-sized battery stacks, ranging from photovoltaic home storage in the kW range to industrial storage with several 100 kW or MW range storage for peak load compensation.

### Summary of invention

The invention is set out in the appended set of claims.

### Technical Problem

The technical problem underlying the present invention arises from the performance limitations of conventional zinc-ion battery electrodes. Particularly, the service life and capacity of such electrodes are inhibited due to the use of certain materials. This primarily pertains to the use of manganese oxide-based electrodes, which, although possessing a high capacity of approximately 308 mAh/mg, suffer from a considerably short lifespan. This shortcoming can be attributed to several factors, including ion radius, hydronium ion, lattice structure, and crystal tunnel structure, among others. Although some progress has been made in enhancing the electrochemical performance of zinc-ion batteries, the lack of suitable cathodes to tolerate the stable insertion/extraction of Zn²⁺ ions remains a challenge (cf. NPL1).

Another limiting factor pertains to the loading capacity of an electrode. Most battery technologies allow for only about 3 mg/cm² of electrode area, making it challenging to add more material per square centimeter. Increasing the amount of material, while augmenting the thickness of the electrode, does not necessarily enhance the usable capacity of the electrode. This limitation has numerous causes, linked both to material combinations and manufacturing capabilities.

Moreover, due to these constraints, the proportion of passive materials in the electrode tends to be high. If there were an approach to add more material per square centimeter of the electrode, the proportion of active materials could be increased, and the proportion of passive materials could be reduced.

In summary, the technical problem underlying the present invention relates to the limitations of conventional electrode materials and their loading capacities, as well as the trade-off between capacity and lifespan in zinc-ion batteries.

### Solution to Problem

This problem is solved as per the characterizing portion of the independent claims.

### Advantageous effect of invention

The invention addresses the dichotomy between electrode lifespan and capacity that has been a persistent challenge in the field of zinc-ion battery technology. By utilizing activated carbon in a unique three-dimensional structure, the invention achieves an elegant balance between these two critical parameters, delivering enhanced durability and a satisfactory level of capacity.

The use of activated carbon as an active material in the electrode brings about substantial longevity. While the capacity of activated carbon might be lower than that of certain other materials such as manganese oxide, the inventive electrode's three-dimensional structure allows for an increased amount of material per square centimeter of the electrode, thus maximizing the proportion of active material. This advantageous configuration facilitates the electrolyte's penetration to a larger number of activated carbon particles, thereby enhancing the electrode's capacity. Consequently, even with a material of lower specific capacity like activated carbon, the invention still succeeds in delivering a satisfactory level of capacity.

Moreover, the inventive process for manufacturing the electrode provides flexibility and control over the resultant capacity of the electrode. By adjusting the thickness of the applied carbonaceous paste, the desired capacity can be achieved. The paste is bilaterally applied to a conductive mesh, which is then pre-dried, pressed, treated in a saline solution, and heated. This process activates the three-dimensional properties and the high capacity of the electrode.

The present invention also expands the application scope of the electrode to include not only zinc-ion batteries but also electrochemical pseudocapacitors and hybrid supercapacitors. This illustrates the versatility of the proposed solution, further augmenting its advantageous effects.

In essence, the present invention provides a practical, innovative, and efficient solution to the technical problems of electrode lifespan and capacity in the realm of zinc-ion batteries and beyond. Through its unique use of activated carbon and three-dimensional structuring, the invention delivers substantial benefits in terms of durability, capacity, and versatility.

### Description of embodiments

A preferred embodiment takes the form of an electrode for a zinc-ion battery comprising a carbonaceous, preferably microporous, active material. The active material is devoid of manganese oxide, nickel, lithium, cobalt, and rare-earth elements. The active material preferably comprises amorphous carbon, and more preferably, is pure activated carbon. The invention also encompasses a process for manufacturing such an electrode and a zinc-ion battery comprising such an electrode.

The manufacturing process involves preparing a carbonaceous paste, which preferably consists largely of activated carbon. The paste is applied to a conductive, preferably metallic, mesh such that the mesh forms a current collector coated with the active material. The electrode, once coated, is then subjected to a series of treatments including pre-drying, pressing, saline treatment, and heating, which serve to activate the three-dimensional properties and the high capacity of the electrode.

In the preferred embodiment, the carbonaceous paste is prepared by mixing activated carbon with a binder. The binder serves to hold the activated carbon particles together and to the conductive mesh. The paste may also include non-activated carbon, preferably in a smaller proportion than the activated carbon. The relative proportions of activated carbon, non-activated carbon, and binder are selected such that upon application, the coating exhibits a desired spatial, that is, three-dimensional, geometry.

The thickness of the applied paste is adjusted according to the desired capacity of the electrode. The paste can be applied bilaterally to the conductive mesh, thereby maximizing the surface area for ion interaction and further enhancing the electrode's capacity. Once the electrode is coated with the paste, it is pre-dried and then pressed to ensure firm adherence of the active material to the current collector. The electrode is then treated in a saline solution and heated, for example, in an oven.

### Example

In an illustrative embodiment, a carbonaceous paste is prepared by mixing 70 % activated carbon, 20 % non-activated carbon, and 10 % polyvinylidene fluoride (PVDF) as a binder. The constituents are mixed in a solvent, such as N-methyl-2-pyrrolidone (NMP), until a homogenous paste is achieved.

This paste is then applied bilaterally to a copper mesh current collector, resulting in a thickness of approximately 150 µm on each side. The coated electrode is then pre-dried at 80 °C for 12 hours to remove the solvent. Once dried, the electrode is pressed under a pressure of 10 MPa to ensure good adherence of the active material to the current collector. The electrode is then soaked in a saline solution for one hour, followed by heating in an oven at 250°C for 2 hours.

The resulting electrode, with its activated carbon-based three-dimensional structure, is then incorporated into a zinc-ion battery. The battery exhibits satisfactory capacity and significantly extended lifespan due to the unique properties of the electrode.

This illustrative example provides a practical implementation of the claimed invention, supporting the feasibility and advantageous effects of the invention. The described electrode and the process of manufacturing it can be adapted and modified within the scope of the invention as defined by the appended claims.

### Industrial applicability

The present invention finds extensive industrial applicability in the domain of energy storage and power generation, specifically in the manufacturing of zinc-ion batteries, electrochemical pseudocapacitors, and hybrid supercapacitors. The unique design of the electrode, coupled with its enhanced lifespan and satisfactory capacity, makes it an attractive option for energy storage systems across various sectors.

The process for manufacturing the inventive electrode can be readily integrated into existing battery production lines, with minimal adjustments required. The preparation of the carbonaceous paste, the coating of the conductive mesh, and the subsequent treatment processes are all compatible with standard industrial procedures and machinery. The materials involved, primarily different forms of carbon and common binders, are widely available and economically viable, further facilitating industrial uptake.

In the context of electric vehicles and renewable energy storage systems, both of which demand durable and high-capacity batteries, the present invention presents a promising solution. The extended lifespan of the inventive electrode can contribute to longer-lasting batteries, thereby reducing the frequency of battery replacements and the associated costs and environmental impacts.

Moreover, the invention's applicability extends beyond zinc-ion batteries. The electrode can also be used in electrochemical pseudocapacitors and hybrid supercapacitors, broadening its potential market reach. These applications further underline the versatility and wide-ranging industrial applicability of the invention.

### Citation list

The following documents are cited hereinbefore.

### Patent literature

PTL1: WO 2019/154516 A (HILABS GMBH) 15.08.2019
PTL2: EP 3321990 B (HILABS GMBH) 09.10.2019
PTL3: US 11367915 B (HILABS GMBH) 21.06.2022
PTL4: JP 7138364 B (HILABS GMBH) 16.09.2022
PTL5: CN 111819710 B (HILABS GMBH) 04.04.2023
PTL6: EP 4080647 A (HILABS GMBH) 26.10.2022

### Non-patent literature

NPL1: LI, Changgang, et al. Cathode materials for rechargeable zinc-ion batteries: From synthesis to mechanism and applications. Journal of Power Sources. 15.02.2020, vol.449.

## Claims

1. Electrode for a zinc-ion battery,
**characterized in**
a carbonaceous, preferably microporous, active material.

2. Electrode as per Claim 1,
**characterized in that**
the active material is devoid of manganese oxide, lithium, nickel, lithium, cobalt, and rare-earth elements.

3. Electrode as per Claim 2,
**characterized in that**
the active material comprises amorphous carbon.

4. Electrode as per Claim 3,
**characterized in that**
the active material is preferably pure activated carbon.

5. Process for manufacturing an electrode as per any of the preceding claims,
**characterized in**
preparing a carbonaceous paste, preferably consisting largely of activated carbon, and
applying the paste to a conductive, preferably metallic, mesh such that the mesh forms a current collector coated with the active material.

6. Process as per Claim 5,
**characterized in that**
non-activated carbon, preferably in smaller proportion than the activated carbon, is added to the paste.

7. Process as per Claim 6,
**characterized in that**
binders are added to the paste.

8. Process as per Claim 7,
**characterized in that**
the activated carbon, non-activated carbon, and binders are composed such that, upon applying the paste, the coating exhibits a desired spatial geometry.

9. Process as per any of Claim 5 through Claim 8,
**characterized in that**
the paste is applied in a thickness that imparts to the electrode a desired capacity.

10. Process as per any of Claim 5 through Claim 9,
**characterized in that**
the paste is applied to the mesh bilaterally.

11. Process as per any of Claim 5 through Claim 10,
**characterized in that**,
upon coating, the electrode is pre-dried and then pressed.

12. Process as per any of Claim 5 through Claim 11,
upon pressing, the electrode is treated in a preferably saline solution and then heated, for example, in an oven.

13. Zinc-ion battery
**characterized in**
a cathode as per any of Claim 1 through Claim 4.

14. Electrochemical pseudocapacitor
**characterized in**
a cathode as per any of Claim 1 through Claim 4.

15. Hybrid supercapacitor
**characterized in**
a cathode as per any of Claim 1 through Claim 4.
